# EUROPEAN PATENT APPLICATION

(11) **EP 4 796 367 A2**
(43) Date of publication of application: **26.08.2026**
(21) Application number: 26191960.9
(22) Date of filing: 11.02.2022
(51) Int. Cl.: B60L 9/00

(54) **ELECTRICAL TRACTION SYSTEM FOR AN INDUSTRIAL ELECTRIC VEHICLE, INDUSTRIAL ELECTRIC VEHICLE, ELECTRICAL POWER SUPPLY SYSTEM AND METHOD OF PROVIDING ELECTRICAL ENERGY TO AN INDUSTRIAL ELECTRIC VEHICLE**

(62) Document number(s) of the earlier application(s) in accordance with Art. 76 EPC: 22708499.3 / 4 476 088
(71) Applicant: ABB Schweiz AG, 5400 Baden (CH)
(72) Inventor: BEUTLER, Nic, 8048 Zürich (CH); MICKE, Thorsten, 68723 Oftersheim (DE); JENELTEN, Thierry, 5300 Turgi (CH); DIKK, Stefan, 5408 Ennetbaden (CH); ASHNAGARAN, Mehrzad, 5502 Hunzenschwil (CH)
(74) Representative: Zimmermann & Partner Patentanwälte mbB

(57) **Abstract**

An electrical traction system for an industrial electric vehicle is described. The electrical traction system includes an electrical energy storage device having a storage electrical potential, a DC drivetrain bus having a drivetrain electrical potential, an electric power converter provided between the electrical energy storage device and the DC drivetrain bus, at least one electric motor, at least one traction inverter provided between the DC drivetrain bus and the at least one electric motor for driving the at least one electric motor, and an electrical interface assembly directly connected to the DC drivetrain bus for receiving an electric power from an electrical power supply system. The electrical interface assembly includes two pin-type connector receivers for each receiving a pin-type connector. A first pin-type connector receiver of the two receivers is configured for being connected to a positive DC potential and a ground potential of a first pin-type connector, and a second pin-type connector receiver of the two receivers is configured for being connected to a negative DC potential and the ground potential of a second pin-type connector.

## Description

Aspects of the invention relate to powering an industrial electric vehicle in an industrial setting. In particular, an industrial electric vehicle with an electrical traction system, and a power supply system for powering the industrial electric vehicle are described. Further aspects relate to the efficient charging of an electrical energy storage device of the industrial electric vehicle.

### Technical background:

Within industrial operations, reliability, safety and productivity are the essential ingredients for a successful operation. With the shift from fossil fuel to electrically operated vehicles, new constraints are imposed through this new technology. In the context of industrial operations, such as mining, agriculture, construction, aviation or related fields, productivity targets should be kept or even be improved with the adoption of new technologies.

Battery-operated industrial electric vehicles (IEVs) may have a limited operational range, long downtime for recharging and high initial cost attributed at least in some part to the battery. Many of the current problems in industrial settings result from an inefficient charging of the IEVs. Large, expensive batteries are required if efficient charging is unavailable, e.g. if the intervals between charging the IEV are designed to correspond to full shifts.

Trolley or power rail systems utilizing conductors, such as contact lines or catenary power lines, are known for powering electric vehicles. However, in industrial settings, power may not be providable by such systems at every desired location, e.g. due to frequent changes in the layout or terrain of the industrial setting, harsh environmental conditions imposing challenging technical requirements, or other constraints.

Document EP 3 030 440 B1 describes a hybrid energy system in a vehicle having an autonomous power supply and being connectable to an external power supply infrastructure along the route of said vehicle. The vehicle is arranged to operate in an autonomous power supply mode and/or in an external power supply mode.

Document US 2013/158827 A1 describes a mining truck with a regenerative braking mechanism. A method of operating the mining truck includes receiving data indicative of a change in demand in an electrical power grid for regenerated electrical power from the mining truck, the electrical power grid including an overhead trolley line coinciding with a haul road extending between a loading site and a dumping site, and commanding braking the mining truck such that application of the retarding torque is allocated to the regenerative braking mechanism in a manner which is responsive to the data.

Document FEDELE EMANUELE ET AL: "Onboard energy storage in rail transport: Review of real applications and techno-economic assessments", IET ELECTRICAL SYSTEMS IN TRANSPORTATION, vol. 11, no. 4, 9 June 2021, pages 279-309, DOI: 10.1049/els2.12026 describes different traction system architectures of battery hybrid trams, such as the Bombardier "Flexity 2" battery hybrid tram, and the "Combino Plus" multimodal tram.

Document EP 2 996 897 B1 describes a bus being connectable to an external power supply by a pantograph.

Document EP 3 572 269 A1 describes a system for supplying electric energy to a mining vehicle, the system having a bipolar LVDC supply having a certain total voltage and the mining vehicle, the mining vehicle having at least a first energy unit and a second energy unit, the first energy unit being connected to a part of said certain total voltage and the second energy unit being connected to another part of said certain total voltage.

Thus, there is a need for a solution for reliably powering an IEV in an industrial setting, preferably in a manner that reduces potential downtime of the IEV, and even more preferably in a cost-effective manner that does not require excessive infrastructure or an oversized battery capacity. The invention described herein may satisfy such needs at least partially.

### Summary of the invention

The invention is set out in the appended set of claims.

According to an aspect, an electrical traction system for an industrial electric vehicle is described. The electrical traction system includes an electrical energy storage device having a storage electrical potential, a DC drivetrain bus having at a drivetrain electrical potential, an electric power converter provided between the electrical energy storage device and the DC drivetrain bus, at least one electric motor, at least one traction inverter provided between the DC drivetrain bus and the at least one electric motor for driving the at least one electric motor, and an electrical interface assembly directly connected to the DC drivetrain bus for receiving an electric power from an electrical power supply system. The electrical interface assembly includes at least one interface for receiving power while the industrial electric vehicle is stationary, and for receiving power while the industrial electric vehicle is moving.

According to an aspect, an electrical traction system for an industrial electric vehicle is described. The electrical traction system includes an electrical energy storage device having a storage electrical potential, a DC drivetrain bus having a drivetrain electrical potential, an electric power converter provided between the electrical energy storage device and the DC drivetrain bus, at least one electric motor, at least one traction inverter provided between the DC drivetrain bus and the at least one electric motor for driving the at least one electric motor, and an electrical interface assembly directly connected to the DC drivetrain bus for receiving an electric power from an electrical power supply system. The electrical interface assembly includes two pin-type connector receivers for each receiving a pin-type connector. A first pin-type connector receiver of the two receivers is configured for being connected to a positive DC potential and a ground potential of a first pin-type connector, and a second pin-type connector receiver of the two receivers is configured for being connected to a negative DC potential and the ground potential of a second pin-type connector.

According to an aspect, an industrial electric vehicle including an electrical traction system according to an embodiment described herein is described.

According to an aspect, an electrical power supply system for supplying electric power to an industrial electric vehicle is described. The electrical power supply system includes a DC output for providing a DC electric power, the DC output including a positive DC potential terminal and a negative DC potential terminal, and a conductor arrangement including conductors extending in a first direction. A first one of the conductors is electrically connected to the positive DC potential terminal, and a second one of the conductors is electrically connected to the negative DC potential terminal. The conductor arrangement is configured for providing the DC electric power to the industrial electric vehicle traveling adjacent to the conductor arrangement along the first direction. The electrical power supply system further includes a stationary power supply module electrically connected to the DC output, the power supply module comprising at least one pin-type connector for connecting the pin-type connector to a pin-type connector receiver of the industrial electric vehicle.

According to an aspect, an electrical power supply system for supplying electric power to an industrial electric vehicle is described. The electrical power supply system includes a DC output for providing a DC electric power, the DC output including a positive DC potential terminal, a ground terminal, and a negative DC potential terminal. The electrical power supply system further includes a first pin-type connector and a second pin-type connector. The first pin-type connector is connected to the positive DC potential terminal and the ground terminal for connecting the positive DC potential and the ground potential to a first pin-type connector receiver. The second pin-type connector is connected to the negative DC potential terminal and the ground potential for connecting the negative DC potential and the ground potential to a second pin-type connector receiver.

According to an aspect, a method of providing electrical energy to an industrial electric vehicle is described. The method includes providing an industrial electric vehicle with the electrical traction system according to an embodiment described herein, particularly according to an embodiment including at least one interface for receiving power while the industrial electric vehicle is stationary, and for receiving power while the industrial electric vehicle is moving. The method includes providing an electrical power supply system according to an embodiment described herein, particularly according to an embodiment including a conductor arrangement and a stationary power supply module. The method includes, while the industrial electric vehicle is being propelled by the at least one electric motor and traveling adjacent to the conductor arrangement: electrically connecting the electrical interface assembly with the conductor arrangement, powering the at least one electric motor with an electric power received from the conductor arrangement by the electrical interface assembly, and optionally charging the electrical energy storage device of the industrial electric vehicle with the electrical power. The method includes, while the industrial electric vehicle is stationary: electrically connecting with the electrical interface assembly with the stationary power supply module, and charging the electrical energy storage device of the industrial electric vehicle with an electric power received from the stationary power supply module by the electrical interface assembly.

According to an aspect, an industrial electric vehicle (IEV) is described. An IEV is a vehicle suitable for industrial operations, and may be specialized for industrial operations. An IEV may be an off-highway vehicle. An IEV may be heavy machinery. IEVs may be heavy-duty vehicles. A personal electric vehicle, such as vehicles intended for personal transport, e.g. electric cars, electric motorcycles, recreational vehicles, golf carts, etc. are not considered IEVs. The IEV may be a battery electric vehicle (BEV) or even a hybrid vehicle having (plug-in) charging capabilities, preferably a hybrid vehicle that is primarily powered by electrical energy, e.g. a hybrid vehicle having an auxiliary combustion engine not suitable for operating the IEV at full capacity. While not limited to any specific example, IEVs may include diggers, haulers, drillers, bulldozers, earthmovers, trucks, forklifts, agricultural vehicles such as harvesters or tractors, mining vehicles, construction site vehicles, rail-based vehicles such as locomotives, aircraft such as passenger aircraft, boats, mobile robots or drones. While not limited to any specific example, industrial operations may include operations associated with mining, agriculture, construction, stockyard logistics, or similar industries or industry-related operation.

The systems and methods according to aspects and embodiments described herein may allow an IEV to be powered electrically, particularly fully electrical, in an industrial setting with low downtime or even no downtime. According to embodiments, the IEV may receive electrical power from a conductor arrangement while driving adjacent to the conductor arrangement, and utilize the electrical power for propelling the IEV, as well as charging an onboard battery. While not traveling adjacent to a conductor arrangement, the IEV may be battery-powered, and may be freely operable in areas where providing a conductor arrangement is unfeasible. According to embodiments, the IEV may be efficiently charged with high power while stationary, the efficient high-power charging reducing the required charging time.

Further advantages, features, aspects and details that can be combined with embodiments described herein are evident from the dependent claims, the description and the drawings.

### Brief description of the Figures:

The details will be described in the following with reference to the figures, wherein
- Fig. 1: is a schematic view of an electrical traction system for an industrial electric vehicle according to embodiments;
- Fig. 2: is a schematic view of an industrial electric vehicle according to embodiments;
- Fig. 3: is a schematic view of electrical interface assemblies connected to the DC drivetrain bus according to embodiments;
- Fig. 4: is a schematic view of an electrical power supply system according to embodiments;

- Fig. 5: is a schematic view of an electrical power supply system connected to an industrial electric vehicle according to embodiments;
- Fig. 6: is a schematic view of a method of providing electrical energy to an industrial electric vehicle according to embodiments.

### Detailed description of the Figures and of embodiments:

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described. Unless specified otherwise, the description of a part or aspect in one embodiment applies to a corresponding part or aspect in another embodiment as well.

Reference will be made to potentials. A potential, in the context of this disclosure, is to be understood as an electrical potential, such as a voltage or a voltage range. Unless otherwise specified, an electrical potential generally refers to a constant potential, e.g. a constant voltage, such as a direct current potential. A potential generally is provided by a power source, i.e. a potential may also include a current, and may be the potential of an electric power. A pulsating voltage or a variable voltage may be considered a constant potential, however, an alternating voltage, e.g. a repeatedly changing polarity, is generally not considered a constant potential. Unless specified otherwise, a power is to be understood as an electrical power. The electrical power may have a potential and an electrical current.

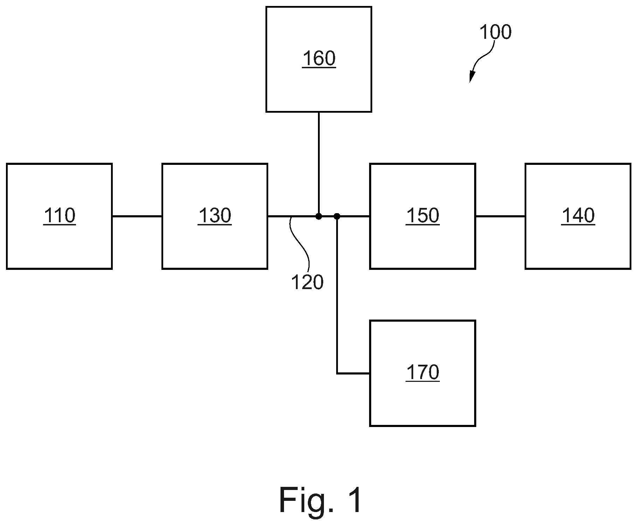

Referring now to Fig. 1, an electrical traction system 100 for an industrial electric vehicle (IEV) is described. In Fig. 1, electrical connections between the components are drawn as single lines for clarity. According to embodiments, the electrical connections may include two or more connections, such as a positive potential connection and a negative potential connection, a positive or negative potential connection and a ground potential connection, or even a multiphase connection, e.g. between the traction inverter 150 and the electric motor 140. The connections between the components shown in Fig. 1 should be understood as connections suitable for transferring electrical power between the components. The connections typically include electrical conductors, such as two or more electrical conductors.

As shown in Fig. 1, the electrical traction system 100 includes an electrical energy storage device 110. The electrical energy storage device may be configured for storing an electrical energy, e.g. by receiving electrical energy and, after having received the electrical energy, providing at least a portion of the electrical energy. According to embodiments, the electrical energy storage device 110 may be an electrochemical device, particularly a battery. According to embodiments, the battery may be a secondary battery, particularly a rechargeable battery. The battery may be a lithium-based battery, such as a lithium titanate oxide (LTO) battery. Further battery types may be suitable, such as liquid metal batteries or (redox) flow batteries or solid states batteries. Further electrical energy storage devices may include, for example, flywheels or rechargeable e-fuel cells.

The electrical energy storage device 110 has a storage electrical potential. The storage electrical potential may be variable, e.g. change over time, in response to a current draw, and/or according to the charging state of the electrical energy storage device 110.

According to embodiments, the storage electrical potential may be a potential of a battery, e.g. the rated voltage and/or the nominal voltage of a battery. The storage electrical potential may be lower than 2200 V, lower than 2000 V, lower than 1800 V, lower than 1600 V, lower than 1400 V, lower than 1200 V, lower than 1000 V, or even lower than 800 V. For example, the storage electrical potential may be between 1750 V and 1800 V. The electrical energy storage device 110 may be an assembly of serially connected batteries, i.e. the storage electrical potential may be the sum of the nominal voltages of the serially connected batteries.

According to embodiments, the electrical energy storage device 110 may have a capacity. The capacity may be at least 100 kWh, at least 200 kWh, at least 300 kWh, at least 400 kWh, at least 500 kWh, at least 600 kWh or even at least 700 kWh. According to embodiments, the storage electrical potential may be proportional to the capacity of the energy storage device 110, e.g. a higher capacity battery may have a higher nominal battery voltage.

The electrical traction system 100 has a direct current (DC) drivetrain bus 120. The DC drivetrain bus 120 has a drivetrain electrical potential. The drivetrain electrical potential may be an essentially constant potential, e.g. a constant voltage, or a potential within a defined potential range. For example, the drivetrain electrical potential may be a potential of at least 600 Volt (V), or at least 700V, or at least 800 V, or at least 900 V, or at least 1000 V, or at least 1200 V, or at least 1400 V, or at least 1600 V, or at least 1800 V, or at least 1900 V, or at least 2000 V, or at least 2100 V, or at least 2200 V, or at least 2300 V, or at least 2400 V, or at least 2500 V, or at least 2600 V, or at least 2700 V, or at least 2800 V, or at least 2900 V such as approximately 3000V. According to embodiments, a combination of a drivetrain electrical potential, such as a drivetrain electrical potential disclosed herein, being higher than and close to the storage electrical potential, such as a storage electrical potential disclosed herein, may be beneficial. For example, resistance and/or power conversion losses in the electrical traction system and particularly the power supply system may be minimized.

According to embodiments, the storage electrical potential may be higher than the drivetrain electrical potential. For example, the storage electrical potential may be a potential of at least 600 Volt (V), or at least 700V, or at least 800 V, or at least 900 V, or at least 1000 V, or at least 1200 V, or at least 1400 V, or at least 1600 V, or at least 1800 V, or at least 1900 V, or at least 2000 V, or at least 2100 V, or at least 2200 V, or at least 2300 V, or at least 2400 V, or at least 2500 V, , or at least 2600 V, or at least 2700 V, or at least 2800 V, or at least 2900 V such as approximately 3000V. For example, the drivetrain electrical potential may be lower than 2200 V, lower than 2000 V, lower than 1800 V, lower than 1600 V, lower than 1400 V, lower than 1200 V, lower than 1000 V, or even lower than 800 V. This may beneficially allow the use of the electrical traction system in an infrastructure, such as an existing and/or standardized infrastructure, providing power at a given voltage. Beneficially, the traction system may be retrofitted to existing vehicles or even vehicle fleets, and electrical energy storage devices to be used in the electrical traction system are not limited to a specific type.

The drivetrain electrical potential may vary during operation of the electrical traction system 100, e.g. the drivetrain electrical potential may vary by up to 5%, up to 10% or even up to 15%, e.g. during high load conditions causing a voltage drop. Beneficially, the variation of the drivetrain electrical potential may be low, e.g. even below 2%, or even below 1%. The drivetrain electrical potential may be a potential of the electrical traction system 100 under operating conditions, such as when driving the electric motor 140 for propelling the IEV, and the drivetrain electrical potential may be lower or even zero in e.g. an unpowered state, a standby state or the like.

The DC drivetrain bus 120 may be a power bus for providing an electrical connection between components of the electrical traction system 100, such as the components shown in Fig. 1. The DC drivetrain bus 120 may be configured for transferring electric power between components of the electrical traction system, such as the components shown in Fig. 1. According to embodiments, the DC drivetrain bus 120 may include at least two conductors, such as rails, bus bars, and/or cables. The at least two conductors may have the drivetrain electrical potential, e.g. one conductor may have a positive DC potential, and one conductor may have a negative DC potential, the difference between the positive DC potential and the negative DC potential corresponding to the drivetrain electrical potential.

The electrical traction system 100 includes an electric power converter 130 provided between the electrical energy storage device 110 and the DC drivetrain bus 120. The electric power converter 130 may be configured for converting an electric power between the electrical energy storage device 110 and the DC drivetrain bus 120.

According to embodiments, the electric power converter 130 may be a DC/DC converter. The electric power converter 130 may be configured for converting the storage electrical potential into the drivetrain electrical potential, and may be configured for converting the drivetrain electrical potential into the storage electrical potential. The converter may be configured for transferring an electrical power between the electric energy storage device 110 and the DC drivetrain bus 120. For example, in a first operation state of the electrical traction system 100 in which the drivetrain electrical potential is higher than the storage electrical potential, the electric power converter 130 may receive an electrical power supplied by the electrical energy storage device 110 at the storage electrical potential, step up the electrical power to the drivetrain electrical potential, and feed the stepped-up electrical power into the DC drivetrain bus 120. Likewise, e.g. in a second operation state of the electrical traction system 100, the electric power converter 130 may receive an electrical power supplied by the DC drivetrain bus 120 at the drivetrain electrical potential, step down the electrical power to the storage electrical potential, and feed the stepped-down electrical power into the electrical storage device 110, e.g. for charging the electrical storage device 110. In embodiments in which the drivetrain electrical potential is higher than the storage electrical potential, the operation states may be reversed. According to embodiments, in operation states of the electrical traction system 100 in which power is fed into the DC drivetrain bus 120 by the electric power converter 130, the drivetrain electric potential may be defined by the electric power converter 130.

According to embodiments, the electrical traction system 100 may be configured for driving the at least one electric motor 140 with power provided to the DC drivetrain bus 120 by the electrical energy storage device 110 and the electric power converter 130, or by the electrical interface assembly 160. Additionally, the power may be supplied by both the electrical energy storage device 110 and the electrical interface assembly in combination, e.g. under high-load conditions.

According to embodiments, the electric power converter 130 is configured for charging the electrical energy storage device 110 with electrical power received from the DC drivetrain bus 120 and discharging the electrical energy storage device 110 to provide electrical power to the DC drivetrain bus 120. For example, the electric power converter 130 may be configured for providing a constant charging current to a battery for charging the battery. For example, the electric power converter may include a charger, the charger providing a charging power to the electrical energy storage device 110, the charging power having a controlled charging voltage and/or charging current. The electric power converter 130 may include, or be communicatively connected to, a battery management system for determining e.g. a charging state, a health state, a temperature, or other operational parameters of a battery included in the electrical energy storage device 110.

The electric traction system 100 includes an electric motor 140 and a traction inverter 150 provided between the DC drivetrain bus 120 and the electric motor 140. The traction inverter 150 is configured for driving the electric motor 140, i.e. providing power to the electric motor so that the electric motor 140 may propel an IEV.

According to embodiments, the electric traction system 100 may include more than one electric motor 140, and/or more than one traction inverter 150. For example, an IEV including the traction system 100 may have an electric motor 140 provided at two or more wheels or axles for individually powering the wheels or axles. Each electric motor 140 may be individually driven by a separate traction inverter 150, or a traction inverter 150 may drive two or more electric motors 140. The electrical traction system 100 shown in Fig. 1 may, for example, include one or more additional electric motors and/or traction inverters as a secondary device 170.

According to embodiments, the traction inverter 150 may be a voltage source inverter. According to embodiments, the traction inverter 150 may be a current source inverter.

According to embodiments, the traction inverter 150 may be configured for driving the electric motor 140 at a variable power, e.g. to control the speed, torque and/or power of the electric motor 140, e.g. according to an input of a driver of the IEV, and/or a drive assistance system of the IEV.

The traction inverter 150 may be configured for driving the electric motor 140 as a brake, e.g. by causing the electric motor 150 to function as a generator and/or a regenerative brake. The traction inverter 150 may be configured for feeding a recuperated brake energy as an electric power into the DC drivetrain bus 120. According to embodiments, in operating modes of the electrical traction system 100 in which power is fed into the DC drivetrain bus 120 by the traction inverter 150, the drivetrain electrical potential may be set by the traction inverter 150.

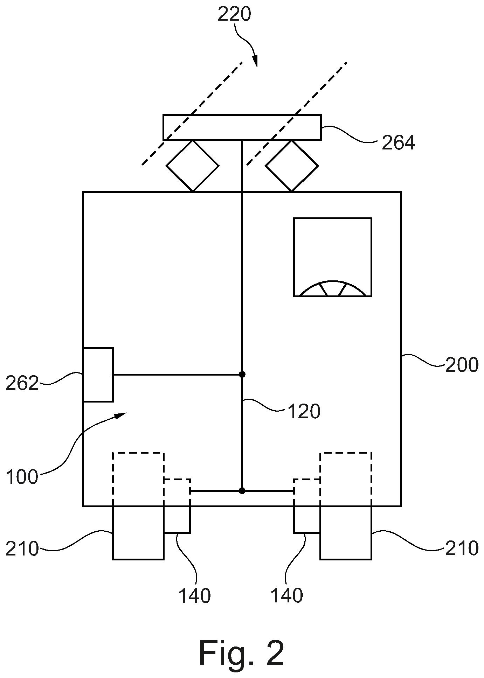

The electrical traction system 100 includes an electrical interface assembly 160. Embodiments of the electrical interface assembly will be described in further detail with reference to Fig. 2, Fig. 3 and Fig. 5.

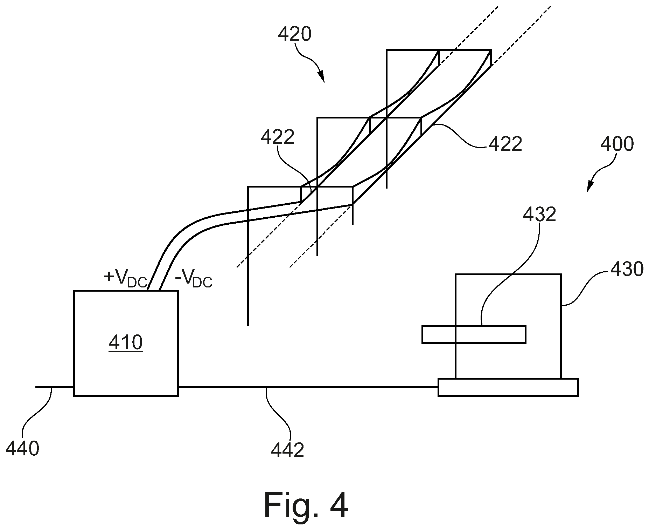

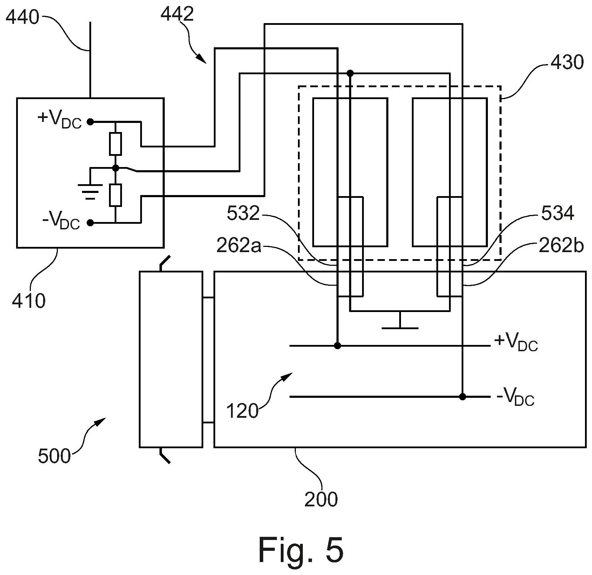

The electrical interface assembly 160 is directly connected to the DC drivetrain bus 120 for receiving an electric power from an electric power supply system, such as the electric supply system described in further detail with reference to Fig. 4 and Fig. 5. The electric power may be supplied and receivable by the electrical traction system 100 at essentially the same potential as the drivetrain electrical potential. The electrical interface assembly 160 may be configured for galvanically connecting the DC drivetrain 120 to the power supply system. The electrical interface assembly 160 and the DC drivetrain 120 may be devoid of a converter, a DC/DC converter, a transformer, and/or a rectifier arranged therebetween. A decoupling device, such as a disconnector, a circuit breaker, a fuse, or a controllable or automatic protection device may be provided between the DC drivetrain 120 and the electrical interface assembly 160.

As shown in Fig. 1, according to embodiments, the electrical traction system 100 may include one or more secondary devices 170 electrically connected to the DC drivetrain bus 120.

According to embodiments, a secondary device 170 may include an auxiliary power supply. The auxiliary power supply may be configured for powering auxiliary systems of an IEV, such as a low voltage power system for powering low voltage components and/or services of an IEV. For example, the low voltage power system may be a 12 V, a 24 V, a 36 V, or a 48 V power system. For example, a low voltage component may be a heater, particularly a cabin heater, lights such as internal lights including cabin lights, external lights such as headlights, tail lights, spotlights or the like. In another example, additionally or alternatively, the auxiliary power supply may include an inverter for providing a 100 V, 110 V, 220 V, or 230 V alternating voltage, e.g. at 50 Hz and/or 60 Hz, e.g. a typical consumer power grid electrical alternating voltage, e.g. for supplying power to devices configured for utilizing the alternating voltage.

According to embodiments, a secondary device 170 may include a brake chopper. The brake chopper may be a braking chopper. The brake chopper may be connected to a dummy load, such as a brake resistor. The brake chopper may be configured for dumping and/or dissipating a power which may not be otherwise useable, e.g. such as a recuperated power, the recuperated power being higher than the power utilizable for charging the electrical energy storage device or feedable into the conductor arrangement via the electrical interface assembly 160.

According to embodiments, the secondary device 170 may include a plurality of traction motors, such as the traction motor 140, and may include a plurality of traction inverters such as the traction inverter 150.

According to embodiments, the secondary device 170 may include an auxiliary motor and/or an auxiliary inverter for driving the auxiliary motor. The auxiliary motor may, for example, be a motor for powering a pump of a hydraulic system of the IEV.

According to embodiments, the secondary device 170 may include an auxiliary charger. The auxiliary charger may be a charger for charging the electrical energy storage device 110, e.g. independently of the electric power converter 130, or by feeding an electric power into the DC drivetrain bus 120. The auxiliary charger may be configured for, in addition or alternatively to the electrical traction system 100 receiving an electrical power via the electrical interface assembly 160, receiving a power with a potential different from the drivetrain electrical potential. For example, the auxiliary charger may be an emergency charger configured for charging the electrical energy storage device when receiving an electric power from an electrical power supply system via the electrical interface assembly 160 is not possible, e.g. to restore the IEV to a (limited) operational state. The electric power receivable by the auxiliary charger may be lower than the electric power receivable by the electrical interface assembly 160, i.e. have a lower power, voltage and/or current. The auxiliary charger may include a rectifier and/or a converter, and may be electrically connected to the DC drivetrain bus, and/or the electrical energy storage device.

Beneficially, the storage electrical potential may be lower than the drivetrain electrical potential. This may allow the DC drivetrain bus to be operated at a high potential requiring lower current draw, while simultaneously allowing the use of electrical energy storage devices, such as batteries, rated below the drivetrain electrical potential. Even in embodiments where the electrical energy storage device operates at approximately the same potential as the drivetrain electrical potential, or even in embodiments where the electrical energy storage device operates at a higher potential than the drivetrain electrical potential, the electrical traction system described herein may beneficially have a stable drivetrain electrical potential even if the storage electrical potential drops over time, e.g. due to a discharge of the battery.

According to a first embodiment, the electrical interface assembly 160 includes at least one interface for receiving power while the industrial electric vehicle is stationary, and for receiving power while the industrial electric vehicle is moving. The electrical interface assembly 160 may include a first interface for receiving power while the industrial stationary, and a second interface for receiving power while the industrial electric vehicle is moving. The first interface may be different from the second interface. According to a second embodiment, which may be combined with embodiments described herein, the electrical interface assembly 160 includes two pin-type connector receivers for each receiving a pin-type connector. Examples of the first embodiment and the second embodiment will be explained in further detail below, e.g. with reference to Fig. 2-5. According to embodiments, in operation states of the electrical traction system 100 in which power is fed into the DC drivetrain bus 120 by the electrical interface assembly 160, the drivetrain electric potential may be defined by the system, e.g. the electrical power supply system 400 or 500, feeding power into the DC drivetrain bus 120 via the electrical interface assembly 160.

According to embodiments, the electrical traction system 100 may include a controller for controlling the drivetrain electrical potential. The controller may be included in the electric power converter 130, or be a separate component (not shown). The controller may monitor the drivetrain electrical potential, and have stored therein a set target potential, such as a set potential threshold. The controller may monitor the available power sources, i.e. monitor if power is fed into the DC drivetrain bus by one or more of the electric power converter 130, the electrical interface assembly 160, and/or the traction inverter 150. The controller may enable the electric power converter 130 to draw power from the electrical energy storage device 110 in states where no or insufficient power is fed into the DC drivetrain bus, i.e. in states where the drivetrain electrical potential falls below a certain threshold. The controller may enable the electric power converter 130 to charge the electrical energy storage device 110, or even, preferably as a secondary option, the brake chopper 170, in states where drivetrain electrical potential exceeds a certain threshold, e.g. in cases where the recuperated power fed into the DC drivetrain bus by the traction inverter cannot be fed back into the power supply system via the electrical interface assembly 160.

Referring now to Fig. 2, an industrial electric vehicle (IEV) 200 including the electrical traction system 100 according to an embodiment is shown. The IEV is shown in a front-facing view, with the electrical traction system 100 shown as a schematic circuit diagram in a schematic sectional drawing. Some elements of the electrical traction system 100, such as the electrical energy storage device 110 or the traction inverter 150 have been omitted in Fig. 2 for clarity.

The IEV 200 has at least two wheels 210, such as e.g. four or more wheels. In the example shown in Fig. 2, each wheel 210 has an electric motor 140 for individually driving the wheel 210. A traction inverter 150 may be provided for each electrical motor 140, or may power two or more electrical motors 140.

According to embodiments, the IEV 200 is an electric vehicle, i.e. a vehicle powered primarily, preferably exclusively, by electric power, particularly without generating the electric power from e.g. a combustion engine, such as e.g. a diesel electric vehicle. According to embodiments, the IEV 200 does not comprise a combustion engine with a mechanical output power of more than 10 % of the mechanical output power of the at least one electric motor. For example, the IEV 200 may be devoid of a combustion engine, or the IEV 200 may optionally include a (small) combustion engine for powering secondary devices unrelated to the drivetrain of the IEV, or the (small) combustion engine may be included in an emergency power plant not intended for use during normal operation of the IEV 200.

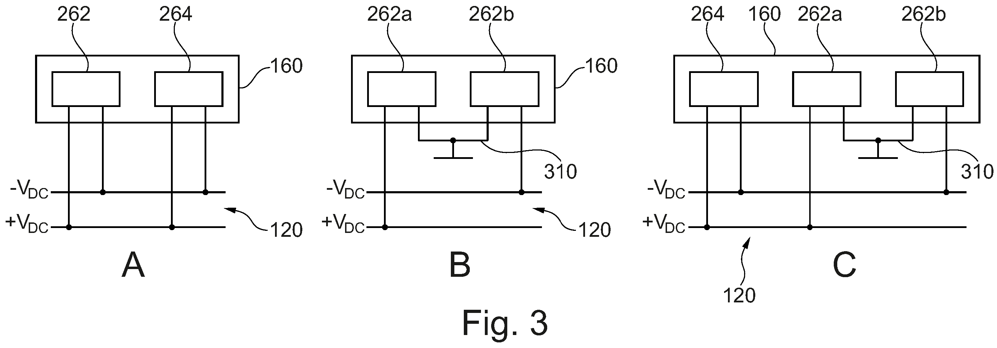

As shown in Fig. 2, the electrical traction system 100 includes a DC drivetrain bus 120, and an electrical interface assembly directly connected to the DC drivetrain bus 120. The electrical interface assembly includes a conductor interface 264 and at least one pin-type connector receiver 262. The conductor interface 264 may be the first interface, and the at least one pin-type connector receiver 262 may be the second interface. As shown in Fig. 2, both the conductor interface 264 and the pin-type connector interface 262 are directly connected to the DC drivetrain bus 120. According to embodiments, the at least one pin-type connector receiver 262 may be a single pin-type connector receiver, or a first pin-type connector receiver and a second pin-type connector receiver, such as the first pin-type connector receiver 262a and the second pin-type connector receiver 262b, as shown in Fig. 3. According to embodiments, the conductor interface 264 may be optional, particularly for embodiments of the IEV 200 not configured for receiving power while the IEV is moving.

As schematically shown in Fig. 2, the conductor interface 264 may be configured for contacting a conductor arrangement 220, such as the conductor arrangement 420 described in further detail with reference to Fig. 4. The conductor interface 264 may be configured and/or particularly suitable for receiving power while the IEV is moving. The conductor interface 264 may be an interface for interfacing with one or more conductors, particularly a pair of conductors. The conductor interface 264 is configured for receiving a positive DC potential and a negative DC potential, particularly an electric power having a positive DC potential and a negative DC potential. For example, the conductor interface may be configured for contacting a pair of conductors carrying a positive voltage and a negative voltage, and transferring, e.g. receiving or providing, a current, and/or an electrical power from or to the pair of conductors.

According to embodiments, the conductor interface 264 may include a current collector. Different types of current collectors may be suitable, particularly a bow collector, a pantograph, a contact shoe, a trolley pole, e.g. a trolley pole including a trolley pole wheel, a collector pole, or other known current collectors. The current collector may be configured for contacting a catenary line and/or an overhead line.

As shown in Fig. 2, the conductor interface 264 may be configured for contacting one or more overhead conductors, however, according to embodiments, the conductor interface 264 may be configured for contacting one or more side-facing or even ground-facing conductors, e.g. be installed at one or both sides of the vehicle, or even be installed on a bottom portion of the IEV 200, such as e.g. a contact shoe. For example, a conductor interface 264 may be configured for contacting and/or electrically connecting to a conductor rail, such as a third rail or a power rail.

According to embodiments, the electrical traction system 100 may include more than one conductor interface 264, particularly for contacting different types of conductors, such as e.g. an overhead line and a third rail, particularly in embodiments for use with a power supply system including different types of conductor arrangements.

According to embodiments, the electrical interface assembly 160, particularly the conductor interface 164 and/or the at least one plug-type connector receiver 162, or 162a and 162b, may be configured for receiving an electric power of a power of more than 500 kW, i.e. receive more than 500 kW of electric power. The electrical interface assembly 160 may be configured for receiving more than 1 MW, more than 2 MW, or even more than 3 MW, or even more than 5 MW.

According to embodiments, the electrical interface assembly 160, particularly the conductor interface 164, may be further be configured for receiving a power of more than 4 MW, more than 5 MW or even more than 6 MW. This may allow the IEV 200 to receive sufficient power for simultaneously powering the electric motors 140 and charging the electrical energy storage device 110.

It was observed that, while the IEV 200 is moving, an electric power suitable for powering the electric motor 140 and optionally charging the electrical energy storage device 110, such as an electric power above 1 MW, above 2 MW, above 3 MW, above 4 MW, above 5 MW or even above 6 MW, such as an electric power of approximately 6 MW, may be reliably transferred to the IEV via the conductor interface 264. However, when the IEV is stationary, a localized heating of the contacting portion of the conductor arrangement 220 and the conductor interface 264 may result in an undesirable deterioration of the conductor interface 264 and/or the conductor arrangement 220 at the point of contact, and may, in extreme cases, result in the conductor interface 264 being welded to the conductor arrangement 220. Thus, charging the electrical energy storage device 110 of the IEV 200 may not be possible at the desired rate when utilizing a conductor interface 264 while the IEV is stationary. The observed problem may be overcome, at least in part, by providing an additional interface particularly suitable for receiving power while the industrial electric vehicle 200 is stationary. The one or more pin-type connector receiver 262 may be particularly suitable as an additional interface.

As shown in Fig. 2, the IEV 200 including the electrical traction system 100 includes a side-facing pin-type connector receiver 262. The pin-type connector receiver 262 may further be installed at other positions on the IEV 200, such as the front or rear of the IEV 200, or even the bottom of the IEV 200. Embodiments of the pin-type connector receiver 262 will be described in further detail with reference to Fig. 3, Fig. 4 and Fig. 5. The IEV 200 may, when stationary, be connected to an electrical power supply system by connecting a pin-type connector to the pin-type connector receiver 262, and may receive an electric power via the pin-type connector receiver 262. Beneficially, the electrical energy storage device 110 may be charged, e.g. at the rated charging rate, with the power received via the pin-type connector receiver 262. This may beneficially reduce a downtime of the IEV during stationary charging. Beneficially, a pin-type connector receiver may be installed at a location of the industrial setting where the IEV 200 is expected to be stationary, such as a loading and/or unloading site, which may allow the IEV 200 to be efficiently charged during the expected stationary time.

Referring now to Fig. 3, embodiments of the electrical interface assembly 160 connected to the DC drivetrain bus 120 are shown in a schematic circuit diagram. The embodiments of the DC drivetrain bus 120 and the electrical interface assembly 160 shown in Fig. 3 may be implemented in the electrical traction system 100 and/or the industrial electric vehicle (IEV) 200 shown in Fig. 1 and Fig. 2. The IEV shown in Fig. 5 may include the embodiments shown in Fig. 3B and Fig. 3C.

Fig. 3A shows, according to an embodiment, an electrical interface assembly 160 with a conductor interface 264 and a single pin-type connector receiver 262. The conductor interface 264 and the pin-type connector receiver are directly connected to the DC drivetrain bus 120. The DC drivetrain bus 120 has two conductors configured for carrying the drivetrain electrical potential. The conductor interface 264 and the pin-type connector receiver are configured for receiving an electric power having the drivetrain electrical potential, such as a positive DC potential +V_{DC} and a negative DC potential -V_{DC}.

According to embodiments, the pin-type connector receiver 262 may further include a connection to a ground potential, such as the connection to the ground potential 310 shown in Fig. 3B and 3C. The connection to ground 310 may include a connection to the vehicle chassis, particularly for maintaining the vehicle chassis in an earthed and/or grounded state. According to embodiments, components of the conductor interface 264 not intended for receiving an electric power may be grounded by a ground connection (not shown).

Fig. 3B shows, according to an embodiment, an electrical interface assembly 160 including two pin-type connector receivers 262a, 262b for each receiving a pin-type connector. A first pin-type connector receiver 262a of the two pin-type connector receivers 262a, 262b is configured for being connected to a positive DC potential +V_{DC} and a ground potential of a first pin-type connector, and a second pin-type connector receiver of the two pin-type connector receivers is configured for being connected to a negative DC potential -V_{DC} and the ground potential of a second pin-type connector 262b. As shown in Fig. 3B, the pin-type connector receivers 262a, 262b are connected to a ground potential 310. The ground potential 310 may be a ground potential of the electrical traction system 100 and/or the IEV 200. The ground potential 310 may be connected to an earth potential and/or be monitored for a ground fault, e.g. during charging, e.g. via the electrical power supply system, to prevent energizing the ground potential. The connection to the ground potential 310 may include a connection to the vehicle chassis, particularly for maintaining the vehicle chassis in an earthed and/or grounded state. As shown in Fig. 3B, only one conductor of the pin-type connector receivers 262a, 262b is connected to the DC drivetrain bus 120. Accordingly, the drivetrain electrical potential of the DC drivetrain bus may be split essentially symmetrically between the first and the second pin-type connector receiver 262a, 262b, each of the pin-type connector receivers 262a, 262b being exposed to approximately half the drivetrain electrical potential. Beneficially, splitting the DC drivetrain electrical potential over two pin-type connector receivers 262a, 262b may allow utilizing pin-type connector receivers and pin-type connectors rated for being operated at less than the drivetrain electrical potential, e.g. essentially half the drivetrain electrical potential. This may beneficially allow the use of lower-rated components, which may reduce cost. Furthermore, as can be seen in Fig. 3B, the connection of the pin-type connector receivers 262a, 262b to the ground potential 310 is not directly connected to the DC drivetrain bus 120, i.e. does not carry a significant current when providing power to the DC drivetrain bus 120. Consequently, a higher current may be providable to each of the pin-type connector receivers 262a, 262b in comparison to a single pin-type connector receiver, such as the pin-type connector receiver 262 shown in Fig. 3A. For example, a higher current may be obtainable by utilizing two or more conductors and/or contacts in the pin-type connector receiver and the pin-type connector in parallel. Accordingly, particularly since both the voltage and the current of the electric power may be increased in embodiments having two pin-type connector receivers 262a, 262b, the receivable power may beneficially be more than two-fold, more than 2.5-fold, more than 3-fold, more than 3.5-fold or even approximately 4-fold higher than the power receivable by a single pin-type connector receiver 262a or 262b.

Fig. 3C shows, according to an embodiment, an electrical interface assembly 160 including two pin-type connector receivers 262a, 262b and a conductor interface 264. Beneficially, the embodiment shown in Fig. 3C may combine the advantages of the embodiments shown in Fig. 3A and Fig. 3B, and be particularly suitable for efficiently receiving an electric power both while the IEV 200 is stationary and moving.

According to embodiments, an electrical traction system 100 including a conductor interface 264 may include a disconnector provided between the DC drivetrain bus 120 and the conductor interface 264 for disconnecting one or preferably both connections between the DC drivetrain bus 120 and the conductor interface 264 while the conductor interface 264 is unconnected and/or not receiving power. Such conditions include situations in which the IEV 200 is being powered, i.e. the DC drivetrain bus 120 is energized, by the electrical energy storage device 110, or particularly situations in which power is provided to the IEV 200 via the one or more pin-type connector receivers 262, 262a, 262b. The disconnector may prevent an unconnected conductor interface 264 from being energized, thereby increasing safety. Accordingly, one or more disconnectors may be provided between the DC drivetrain bus and the one or more plug-type pin connector receivers 262, 262a, 262b to avoid the pin-type connector receivers being energized while the IEV 200 is connected to a conductor arrangement 420 and unconnected to a pin-type connector.

According to embodiments, the pin-type connector receiver 262, or the two pin-type connector receivers 262a, 262b is/are configured for providing power to a discharge system (not shown) for discharging the electrical energy storage device. The at least one pin-type connector receiver 262 may be configured for being connected to a discharge system. The discharge system may include essentially the same mechanical components as a stationary power supply module, such as the stationary power supply module 430 described with reference to Fig. 4. An IEV 200 may require the electrical energy storage device 110 to be discharged under certain conditions, such as e.g. for maintenance or repair of the IEV 200, or even grid stabilization. The discharge system may include one or more pin-type connectors for connecting to the pin-type connector receiver 262, and for receiving a power provided by the electrical traction system 100 via the pin-type connector receivers 262. The discharge system may beneficially utilize the received electrical energy, e.g. by converting and/or feeding the power into an electrical grid, an intermediate electrical power storage device, or even a power supply system such as the power supply system 400. Alternatively, in situations where the power cannot be utilized, the discharge system may include a device for safely dissipating the power, such as a dummy load, such as a resistor bank. The electrical traction system 100 may be configured for being discharged by a discharge system. The discharge system and/or the electrical traction system 100 may be configured for limiting the power during discharging, e.g. by limiting the current draw to a predefined rate, e.g. a safe discharge rate, e.g. as defined by the rating of the electrical energy storage device 110 and/or the electrical power converter 130.

Referring now to Fig. 4, an electrical power supply system 400 according to an embodiment is described. The electrical power supply system 400 is configured for supplying electric power to an industrial electric vehicle (IEV), such as the IEV 200.

The electrical power supply system 400 has a DC output 410 for providing a DC electric power comprising a positive DC potential terminal +V_{DC} and a negative DC potential terminal -V_{DC}. The DC output 410 may include an electric power converter, such as a transformer and/or rectifier, e.g. a DC rectifier substation, for converting an input power received by the input power connection 440 into the DC electric power. The DC output may be configured for receiving an input power from a primary power source. The primary power source may be an electrical grid, a high, medium or low voltage substation, a generator, such as a diesel electric generator or a fuel cell, a photovoltaic installation, a windfarm, an intermediate energy store such as a battery installation, fly wheels, supercapacitors, or any other source of electrical power. The input power may be provided as a low or medium voltage. The input power may be a direct current (DC) or an alternating current (AC). The input power may have a power of approximately at least 1 MW, at least 2 MW, or at least 3 MW, at least 4 MW, at least 5 MW, or even at least 6 MW, or even at least 10 MW. For example, a DC output for providing a DC electric power to a pair of plug-type connectors may be configured for receiving an input power of approximately 3.3 MW, and be configured for providing a DC electric power of approximately 3 MW. For example, a DC output for providing a DC electric power to a conductor arrangement and/or a pair of plug-type connectors may be configured for receiving an input power of approximately 6.5 MW, and be configured for providing a DC electric power of approximately 6 MW. For example, the input power may be a 3-phase 6 kV AC input. Further input power examples include AC inputs having 0.6 kV, 1 kV, 3.3 kV, 4.16 kV, 6.6 kV, 11 kV, 12.47 kV, 15 kV, 22 kV, 33 kV, or 35 kV.

As shown in Fig. 4, the electrical power supply system 400 includes a conductor arrangement 420. The conductor arrangement 420 has two conductors 422, i.e. a pair of conductors 422. The conductors 422 extend in a first direction along a length. The conductors 422 may, for example, extend along a pathway, such as a road, for being contacted by a vehicle, such as the IEV 200, while traveling along the pathway and adjacent to the conductor arrangement 420. The conductors 422 are provided essentially parallel to one another. As shown in Fig. 4, the conductors may be suspended, e.g. in a catenary arrangement and/or an overhead line arrangement.

According to embodiments, the conductor arrangement 420 shown in Fig. 4 may, additionally or alternatively, include a different type of conductor arrangement than a catenary arrangement, such as e.g. a wall-mounted arrangement, a power rail, such as a ground-based rail, or other known conductor arrangements.

As shown in Fig. 4, a first one of the conductors 422 is electrically connected to the positive DC potential terminal +V_{DC}, and a second one of the conductors 422 is electrically connected to the negative DC potential terminal -V_{DC}. According to embodiments, the positive DC potential +V_{DC} may be a positive DC potential against ground and/or earth, and the negative DC potential -V_{DC} may be a negative DC potential against ground and/or earth, however the potentials may also be floating potentials. Alternatively, one of the positive DC potential and the negative DC potential + V_{DC}, -V_{DC} may be connected to ground and/or earth.

The conductor arrangement 420 is configured for providing the DC electric power to an industrial electric vehicle 200 traveling adjacent to the conductor arrangement along the first direction. The difference between the positive DC potential and the negative DC potential +V_{DC}, -V_{DC} may correspond to a drivetrain electric potential of an electrical traction system 100 or an IEV 200 described herein. Beneficially, the DC electric power provided to the IEV 200 by the power supply system 400 may be directly, i.e. without prior conversion or transformation, useable for powering the IEV 200, without requiring a transformation or conversion by the IEV 200.

As shown in Fig. 4, the electrical power supply system 400 includes a stationary power supply module 430 electrically connected to the DC output. The power supply module 430 shown in Fig. 4 includes a pin-type connector 432 for connecting the pin-type connector to a pin-type connector receiver of an IEV, such as the pin-type connector receiver 264 of the IEV 200. The power supply module 430 being stationary is to be understood as the power supply module 430 being stationary at least for the period of time an IEV is connected to the pin-type connector 432. The power supply module 430 may be configured for charging a stationary IEV. Accordingly, the power supply module may be moveable and/or transportable, and may be temporarily set up at the industrial site, and even be relocated as needed.

According to embodiments, the power supply module 430 may include some or all of the features of the connector module described in document PCT/EP2021/074527, which is included herein in its entirety, or at least to the extent relating to embodiments of the connector module described in the document. Beneficially, the power supply module 430 may be moveable, i.e. height-adjustable, as described in the document.

According to embodiments, the pin-type connector 432 may include some or all of the features of the pin-type connector described in document EP3280608A1, which is included herein in its entirety, or at least to the extent relating to embodiments of the pin-type connector described in the document.

As shown in Fig. 4, the power supply module 430 is electrically connected to the DC output 410 by an output power connection 442. The electrical power supply system 400 may include more than one DC output 410. For example, several DC outputs 410 may provide power to the conductor arrangement 420 and/or the stationary power supply module 430. For example, a first one or more DC outputs such as DC output 410 may provide power to the conductor arrangement 420, and a second one or more DC outputs may provide power to one or more power supply modules such as the power supply module 430. The output power connection 442 is drawn in Fig. 4 as a single line, however the output power connection may include electrical connections for electrically connecting the power supply module 430 to the positive DC potential terminal and the negative DC potential terminal, and may further include additional electrical connections, such as an electrical connection connecting a ground and/or earth potential of the DC output to a ground potential of the IEV via an electrical interface assembly of the IEV. An output power connection 442 according to an embodiment will be further described with reference to Fig. 5. The output power connection 442 may, for example, include at least one power cable, including the electrical connections, suitable for transferring the DC electric power.

Referring now to Fig. 5, an electrical power supply system 500 connected to an industrial electric vehicle 200 is shown. According to embodiments, the electrical power supply system 500 may be an electrical power supply system 400 as described with reference to Fig. 4, i.e. include a conductor arrangement 420. According to embodiments, the electrical power supply system 500 may be devoid of a conductor arrangement 420, and the industrial electric vehicle 200 may be devoid of a conductor interface 264.

As shown in Fig. 5, a stationary power supply module 430 is electrically connected to a DC output 410 by the output power connection 442. The output power connection 442 is drawn in the style of an electric circuit diagram, and may be implemented e.g. as a single cable, or two or more cables.

The stationary power supply module 430 includes two pin-type connectors 532, 534. The stationary power supply module 430 may include the two pin-type connectors 532, 534, e.g. in a single housing, i.e. the stationary power supply module 430 may be a single module. The stationary power supply module 430 may also include two separate modules, such as two freestanding sub-modules, or two sub-modules mounted, e.g. at a defined spacing between the pin-type connectors 532, 534, on a frame, such as a transportable frame, a base, a foundation or the like.

The pin-type connector 532 is connected to the positive DC potential terminal +V_{DC} of the DC output 410, and an earth terminal having an earth potential, and the pin-type connector 534 is connected to the negative DC potential terminal -V_{DC} of the DC output 410 and the earth terminal. As shown in Fig. 5, The pin-type connectors 532, 534 are connected to the pin-type connector receivers 262a, 262b of the IEV 200. The DC drivetrain bus 120 and the connection between the DC drivetrain bus and the pin-type connector receivers 262a, 262b may be implemented as described with reference to Fig. 3B and Fig. 3C.

According to embodiments, the earth potential may be a ground potential, particularly when the earth potential and the ground potential are electrically connected. The positive DC potential terminal +V_{DC} and the negative DC potential terminal -V_{DC} may be balanced against earth and/or ground, e.g. by the two balancing resistors shown in Fig. 5 included in the DC output 410, however, additional or alternative known balancing circuits may be implemented. According to embodiments, a potential bias of the positive DC potential terminal +V_{DC} and the negative DC potential terminal -V_{DC} may be monitored to detect faults, e.g. to detect earth faults, unexpected connection resistances between the pin-type connectors 532, 534 and the pin-type connector receivers 262a, 262b, or any other potentially unsafe state.

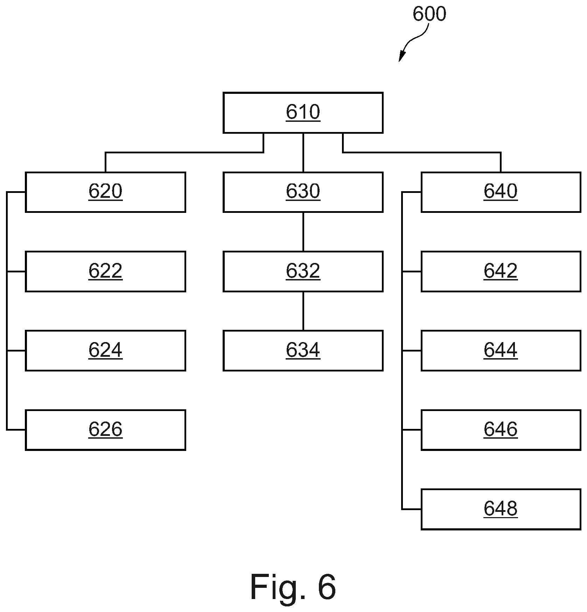

Referring now to Fig. 6, a method 600 of providing electrical energy to an industrial electric vehicle is described. The method includes providing 610 an industrial electric vehicle (IEV) according to embodiments described herein, such as the IEV 200, the IEV including an electrical traction system according to embodiments described herein, such as the traction system 100. The method further includes providing 610 an electrical power supply system according to embodiments described herein, such as the electrical power supply system 400 or 500. According to embodiments, the method 600 may be applied for moving IEVs and stationary IEVs.

According to embodiments, the method 600 may be applied for stationary IEVs. A method 600 applied for stationary IEVs may be limited to executing the operations 630-634. A method 600 applied for stationary IEVs may particularly include providing an IEV and an electrical power supply system according any embodiment having two pin-type connectors and pin-type connector receivers described herein.

The method 600 includes operations executed conditionally for at least two states 620, 630, and optionally three states 620, 630, 640, the states being defined by the operational state and/or use of the IEV.

In state 620, the IEV is being propelled by the at least one electric motor and traveling adjacent to a conductor arrangement. In state 620, the electric motor may be receiving power for propelling the IEV. When in state 620, the method includes executing operations 622-626.

The method 600 includes electrically connecting 622 the electrical interface assembly with the conductor arrangement. Electrically connecting the electrical interface assembly with the conductor arrangement may include, for example but not limited thereto, raising a pantograph until the pantograph contacts the conductor arrangement, coupling one or more trolley pole connectors to the conductor arrangement, or coupling a contact shoe to a power rail. The electrical connection may be formed before or after the state 620 is entered.

The method 600 further includes powering 624 the at least one electric motor with an electric power received from the conductor arrangement by the electrical interface assembly. As described with reference to the electrical traction system 100, electrical power may be provided by the electrical power supply system, transferred via the conductor arrangement, received via the electrical interface assembly and fed into a DC drivetrain bus of the IEV. The power then may be supplied by the DC drivetrain bus to a traction inverter for driving the electric motor.

The method 600 may further include charging 626 the electrical energy storage device of the IEV with the electrical power. The electric power available at the DC drivetrain bus may be higher than the power required for driving the electric motor. Thus, additional power may be utilized for charging the electrical energy storage. Charging the electrical energy storage device may be performed as described with reference to the electric power converter 130 being utilized for charging the electric energy storage device 110.

The method 600 may, alternatively to operation 626, include discharging the electrical energy storage device of the IEV to provide an electrical power to the DC drivetrain bus. This may allow the electric motor to be powered both by the electrical energy provided by the electrical energy storage device and the electrical power supply system, e.g. in conditions where the power received from the electrical power supply system is insufficient and/or intermittently interrupted.

In state 630, the IEV is stationary. The IEV may be immobile and may even be in a non-drivable state, e.g. be parked, be essentially powered down, have no driver present or the like. State 630 may e.g. include a waiting period, a parking period, a loading or unloading operation or a similar state. When in state 630, the method includes executing operations 632 and 634.

The method 600 includes electrically connecting 632 the electrical interface assembly with the stationary power supply module. Electrically connecting 632 the electrical interface assembly with the stationary power supply module may include positioning the IEV in a charging position, such as a position adjacent to the stationary power supply module, particularly a position in which the one or more plug-type connectors of the stationary power supply module may be inserted and/or connected to the one or more plug-type connector receivers of the IEV. The operation 632 may include connecting the one or more plug-type connectors to the one or more plug-type connector receivers. The operation 632 may include performing safety checks, such as monitoring a ground potential, e.g. for potential ground faults, and/or monitoring a connector resistance. The operation 632 may include automatically connecting the one or more plug-type connectors to the plug-type connector receiver(s).

The method 600 includes charging 634 the electrical energy storage device of the industrial electric vehicle with an electric power received from the stationary power supply module by the electrical interface assembly. Charging the electrical energy storage device may be performed as described with reference to the electric power converter 130 being utilized for charging the electric energy storage device 110.

In optional state 640, the IEV may be traveling adjacent to the conductor arrangement. In the operational state 640, the IEV is not utilizing the electric motor for propelling the IEV, i.e. the electric motor may not be receiving power for propelling the IEV. For example, state 640 may be entered by decelerating the IEV, and/or by constantly braking, e.g. during a downhill descent of the IEV. When in state 640, the method may include executing operations 642-648.

The method 600 may include electrically connecting 642 the electrical interface assembly with the conductor arrangement, particularly as described with reference to operation 622.

The method 600 may include regeneratively braking 644 with the at least one electric motor to generate an electric power. The electric power may be converted by the traction inverter and fed into the DC drivetrain bus at the drivetrain electrical potential, e.g. as described with reference to the traction inverter 150.

The method 600 may include charging 646 the electrical energy storage device of the industrial electric vehicle with the (recuperated) electrical power, e.g. as described with reference to operations 626 and/or 634, and/or feeding 648 the electrical power into the conductor arrangement. To feed the electrical power into the conductor arrangement, the drivetrain electrical potential may be increased with respect to the potential of the conductor arrangement until a sufficient current flow is obtained.

The method 600 may further, additionally or alternatively to operations 646 and 648, include dissipating the recuperated power by utilizing a brake chopper, such as the brake chopper described with reference to the secondary device 170. While the dissipated power may potentially not be otherwise utilizable after being dissipated, e.g. as heat, using the electric motor as a brake during e.g. long descents of the IEV may beneficially minimize wear of mechanical components, such as mechanical brakes.

According to embodiments, the method 600 may include operating the DC drivetrain bus at a drivetrain electric potential of more than 1800 V, and/or operating the electrical energy storage device at a storage electrical potential of less than 1800V. For example, the storage electrical potential may be defined by the electrical energy storage device, and the storage electrical potential may be a potential as described herein with reference to the electrical energy storage device 110. For example, the drivetrain electrical potential may be defined by any device feeding power into the DC drivetrain bus, particularly the electrical power converter, the electrical interface assembly, and/or the traction inverter. The drivetrain electrical potential may be a potential as described herein with reference to the DC drivetrain bus 120.

According to embodiments, the method 600 may include operating the DC drivetrain bus at a drivetrain electrical potential of approximately 2600 V and the electrical energy storage device at a storage electrical potential of approximately 1700 to 1800 V.

According to embodiments, the method 600 may include operating the DC drivetrain bus at a drivetrain electrical potential of approximately 1800 V and the electrical energy storage device at a storage electrical potential of approximately 850 V.

According to embodiments, the method 600 may include operating the DC drivetrain bus at a drivetrain electrical potential of more than 800 V and the electrical energy storage device at a storage electrical potential of less than 800 V. According to embodiments, the method 600 may include operating the DC drivetrain bus at a drivetrain electrical potential of more than 1000 V and the electrical energy storage device at a storage electrical potential of less than 1000 V.

According to embodiments, the method 600 may include operating the DC drivetrain bus at a drivetrain electrical potential of more than 1200 V and the electrical energy storage device at a storage electrical potential of less than 1200 V.

According to embodiments, the method 600 may include operating the DC drivetrain bus at a drivetrain electrical potential of more than 1400 V and the electrical energy storage device at a storage electrical potential of less than 1400 V.

According to embodiments, the method 600 may include operating the DC output, or the electrical power supply system, at the drivetrain electrical potential of the DC drivetrain bus. Accordingly, in embodiments having multiple IEVs powered by an electrical power supply system, the drivetrain electrical potential of the IEVs may be standardized.

According to an aspect, the IEV and/or the electrical power supply system may further comprise a network interface for connecting the IEV and/or the electrical power supply system to a data network, in particular a global data network. The data network may be a TCP/IP network such as Internet. The IEV and/or the electrical power supply system is operatively connected to the network interface for carrying out commands received from the data network. The commands may include a control command for controlling the IEV to carry out a task such as reporting a charging state of the battery, a position, a power draw, or other telemetry data. The commands may include a control command for controlling the electrical power supply system to carry out a task such as reporting a power availability, a charging spot availability, charging data during charging, or other stationary data. The IEV and/or the electrical power supply system may include a controller adapted for carrying out the task in response to the control command. The commands may include a status request. In response to the status request, or without prior status request, the controller may be adapted for sending a status information to the network interface, and the network interface is then adapted for sending the status information over the network. The commands may include an update command including update data. In this case, the controller is adapted for initiating an update in response to the update command and using the update data.

The data network may be an Ethernet network using TCP/IP such as LAN, WAN or Internet. The data network may comprise distributed storage units such as Cloud. Depending on the application, the Cloud can be in form of public, private, hybrid or community Cloud.

Benefits of the aspects and/or embodiments described herein may include a more efficient operability of an IEV in the context of an industrial setting. Dedicated charging times may be avoided when using a conductor arrangement for simultaneously powering and charging the IEV, and may be significantly reduced by utilizing a two pin-type connector solution. Furthermore, the industrial site may be set up efficiently. For example, highly frequented or steep roads or pathways may be provided with a conductor arrangement, and remote sites may be accessed by the IEV by utilizing the onboard electric energy storage device. Industrial settings with scheduled stationary times, such as mine operations including frequent loading and unloading operations, may be efficiently provide power to an IEV while the IEV is stationary, and utilizing a conductor interface may be optional. Furthermore, the electrical traction system described herein, in combination with the corresponding electrical power supply system, may be applied to existing diesel-electric designs, or even retrofitted into existing vehicles, to provide a fully electric solution for existing industrial sites.

In the following, implementations of the present disclosure are described:
1. An electrical traction system for an industrial electric vehicle, comprising:
   an electrical energy storage device having a storage electrical potential;
   a DC drivetrain bus having at a drivetrain electrical potential;
   an electric power converter provided between the electrical energy storage device and the DC drivetrain bus;
   at least one electric motor;
   at least one traction inverter provided between the DC drivetrain bus and the at least one electric motor for driving the at least one electric motor;
   an electrical interface assembly directly connected to the DC drivetrain bus for receiving an electric power from an electrical power supply system, wherein
   the electrical interface assembly comprises at least one interface for receiving power while the industrial electric vehicle is stationary, and for receiving power while the industrial electric vehicle is moving.
2. The electrical traction system according to implementation 1, wherein the storage electrical potential is lower or higher than the drivetrain electrical potential, and wherein
   the electric power converter is configured for converting the drivetrain electric potential to the storage electrical potential, and for converting the storage electrical potential to the drivetrain electrical potential.
3. The electrical traction system according to implementation 1 or 2, wherein the electrical traction system is configured for driving the at least one electric motor with power provided to the DC drivetrain bus by one or both of:
   - the electrical energy storage device and the electric power converter, and/or
   - the electrical interface assembly.
4. The electrical traction system according to any one of the preceding implementations, wherein the electrical interface assembly comprises a conductor interface, particularly a current collector, wherein
   the conductor interface is configured for receiving a positive DC potential and a negative DC potential.
5. The electrical traction system according to any one of the preceding implementations, wherein the electrical interface assembly comprises a pin-type connector receiver for receiving a pin-type connector.
6. The electrical traction system according to implementation 5, wherein the electrical interface assembly comprises two pin-type connector receivers for each receiving a pin-type connector, wherein
   a first pin-type connector receiver of the two pin-type connector receivers is configured for being connected to a positive DC potential and a ground potential of a first pin-type connector, and wherein
   a second pin-type connector receiver of the two pin-type connector receivers is configured for being connected to a negative DC potential and the ground potential of a second pin-type connector.
7. The electrical traction system comprising the electrical interface assembly according to implementations 4 and 5, or according to implementations 4 and 6.
8. An electrical traction system for an industrial electric vehicle, comprising:
   an electrical energy storage device having a storage electrical potential;
   a DC drivetrain bus having at a drivetrain electrical potential;
   an electric power converter provided between the electrical energy storage device and the DC drivetrain bus;
   at least one electric motor;
   at least one traction inverter provided between the DC drivetrain bus and the at least one electric motor for driving the at least one electric motor;
   an electrical interface assembly directly connected to the DC drivetrain bus for receiving an electric power from an electrical power supply system, wherein
   the electrical interface assembly comprises two pin-type connector receivers for each receiving a pin-type connector, wherein
   a first pin-type connector receiver of the two pin-type connector receivers is configured for being connected to a positive DC potential and a ground potential of a first pin-type connector, and wherein
   a second pin-type connector receiver of the two pin-type connector receivers is configured for being connected to a negative DC potential and the ground potential of a second pin-type connector.
9. The electrical traction system according to any one of the preceding implementations, wherein the electrical energy storage device is a battery, particularly a lithium titanate oxide battery.
10. The electrical traction system according to any one of the preceding implementations, wherein the traction inverter is a voltage or current source inverter.
11. The electrical traction system according to any one of the preceding implementations, wherein the industrial electric vehicle comprises, connected to the DC drivetrain bus, at least one selected from the group consisting of:
   - an auxiliary power supply;
   - a brake chopper;
   - a plurality of traction motors;
   - an auxiliary motor; and
   - an auxiliary charger.
12. The electrical traction system according to any of the preceding implementations, wherein the electric power converter is configured for charging the electrical energy storage device with electrical power from the DC drivetrain bus and discharging the electrical energy storage device to provide electrical power to the DC drivetrain bus.
13. The electrical traction system according to any of the preceding implementations, wherein the electrical interface assembly is configured for receiving the electric power at a power of more than one megawatt.
14. The electrical traction system according to any of the implementations 5 to 12, wherein the pin-type connector receiver, or the two pin-type connector receivers is/are configured for providing power to a discharge system for discharging the electrical energy storage device.
15. The industrial electric vehicle comprising the electrical traction system according to any of the preceding implementations.
16. The industrial electric vehicle according to implementation 15, wherein the industrial electric vehicle does not comprise a combustion engine with a mechanical output power of more than 10 % of the mechanical output power of the at least one electric motor.
17. An electrical power supply system for supplying electric power to an industrial electric vehicle, comprising:
   a DC output for providing a DC electric power, the DC output comprising a positive DC potential terminal and a negative DC potential terminal;
   a conductor arrangement comprising conductors extending in a first direction, wherein
   a first one of the conductors is electrically connected to the positive DC potential terminal, and a second one of the conductors is electrically connected to the negative DC potential terminal, and wherein
   the conductor arrangement is configured for providing the DC electric power to the industrial electric vehicle traveling adjacent to the conductor arrangement along the first direction; the electrical power supply system further comprising:
   a stationary power supply module electrically connected to the DC output, the power supply module comprising at least one pin-type connector for connecting the pin-type connector to a pin-type connector receiver of the industrial electric vehicle.
18. The electrical power supply system according to implementation 17, wherein the stationary power supply module comprises two pin-type connectors, wherein
   a first pin-type connector of the two pin-type connectors is connected to the positive DC potential terminal and an earth potential for connecting the positive DC potential terminal and the earth potential to a first pin-type connector receiver, and wherein
   a second pin-type connector of the two pin-type connectors is connected to the negative DC potential terminal and the earth potential for connecting the negative DC potential terminal and the earth potential to a second pin-type connector receiver.
19. An electrical power supply system for supplying electric power to an industrial electric vehicle, comprising:
   a DC output for providing a DC electric power, the DC output comprising a positive DC potential terminal, an earth terminal, and a negative DC potential terminal;
   a first pin-type connector and a second pin-type connector, wherein
   the first pin-type connector is connected to the positive DC potential terminal and the earth terminal for connecting the positive DC potential terminal and the earth terminal to a first pin-type connector receiver, and wherein
   the second pin-type connector is connected to the negative DC potential terminal and the earth potential for connecting the negative DC potential terminal and the earth terminal to a second pin-type connector receiver.
20. Method of providing electrical energy to an industrial electric vehicle, the method comprising:
   providing an industrial electric vehicle comprising the electrical traction system according to any one of the implementations 1 to 7;
   providing an electrical power supply system according to implementation 17 or 18;
   while the industrial electric vehicle is being propelled by the at least one electric motor and traveling adjacent to the conductor arrangement:
      - electrically connecting the electrical interface assembly with the conductor arrangement,
      - powering the at least one electric motor with an electric power received from the conductor arrangement by the electrical interface assembly, and optionally
      - charging the electrical energy storage device of the industrial electric vehicle with the electrical power; and
   while the industrial electric vehicle is stationary:
      - electrically connecting the electrical interface assembly with the stationary power supply module, and
      - charging the electrical energy storage device of the industrial electric vehicle with an electric power received from the stationary power supply module by the electrical interface assembly.
21. The method according to implementation 20, further comprising:
   while the industrial electric vehicle is traveling adjacent to the conductor arrangement:
   - electrically connecting the electrical interface assembly with the conductor arrangement,
   - regeneratively braking with the at least one electric motor to generate an electrical power,
   - charging the electrical energy storage device of the industrial electric vehicle with the electrical power, and/or
   - feeding the electrical power into the conductor arrangement.
22. The method according to implementations 20 or 21, further including:
   - operating the DC drivetrain bus at a drivetrain electric potential of more than 1500 volt;
   - operating the electrical energy storage device at a storage electrical potential of less than 1500 volt; and
   - operating the DC output at the drivetrain electrical potential of the DC drivetrain bus.

## Claims

1. An electrical traction system for an industrial electric vehicle, comprising:
an electrical energy storage device having a storage electrical potential;
a DC drivetrain bus having a drivetrain electrical potential;
an electric power converter provided between the electrical energy storage device and the DC drivetrain bus;
at least one electric motor;
at least one traction inverter provided between the DC drivetrain bus and the at least one electric motor for driving the at least one electric motor;
an electrical interface assembly directly connected to the DC drivetrain bus for receiving an electric power from an electrical power supply system, wherein
the electrical interface assembly comprises two pin-type connector receivers for each receiving a pin-type connector, wherein
a first pin-type connector receiver of the two pin-type connector receivers is configured for being connected to a positive DC potential and a ground potential of a first pin-type connector, and wherein
a second pin-type connector receiver of the two pin-type connector receivers is configured for being connected to a negative DC potential and the ground potential of a second pin-type connector.

2. The electrical traction system according to claim 1, wherein the storage electrical potential is lower or higher than the drivetrain electrical potential, and wherein
the electric power converter is configured for converting the drivetrain electric potential to the storage electrical potential, and for converting the storage electrical potential to the drivetrain electrical potential.

3. The electrical traction system according to claim 1 or 2, wherein the electrical traction system is configured for driving the at least one electric motor with power provided to the DC drivetrain bus by the electrical energy storage device and the electric power converter.

4. The electrical traction system according to any one of the preceding claims, wherein the electrical energy storage device is a battery, particularly a lithium titanate oxide battery.

5. The electrical traction system according to any one of the preceding claims, wherein the traction inverter is a voltage or current source inverter.

6. The electrical traction system according to any one of the preceding claims, wherein the industrial electric vehicle comprises, connected to the DC drivetrain bus, at least one selected from the group consisting of:
- an auxiliary power supply;
- a brake chopper;
- a plurality of traction motors;
- an auxiliary motor; and
- an auxiliary charger.

7. The electrical traction system according to any of the preceding claims, wherein the electric power converter is configured for charging the electrical energy storage device with electrical power from the DC drivetrain bus and discharging the electrical energy storage device to provide electrical power to the DC drivetrain bus.

8. The electrical traction system according to any of the preceding claims, wherein the electrical interface assembly is configured for receiving the electric power at a power of more than one megawatt.

9. The electrical traction system according to any one of the preceding claims, wherein the two pin-type connector receivers are configured for providing power to a discharge system for discharging the electrical energy storage device.

10. The industrial electric vehicle comprising the electrical traction system according to any of the preceding claims.

11. The industrial electric vehicle according to claim 10, wherein the industrial electric vehicle does not comprise a combustion engine with a mechanical output power of more than 10 % of the mechanical output power of the at least one electric motor.

12. An electrical power supply system for supplying electric power to an industrial electric vehicle, comprising:
a DC output for providing a DC electric power, the DC output comprising a positive DC potential terminal, an earth terminal, and a negative DC potential terminal;
a first pin-type connector and a second pin-type connector, wherein
the first pin-type connector is connected to the positive DC potential terminal and the earth terminal for connecting the positive DC potential terminal and the earth terminal to a first pin-type connector receiver, and wherein
the second pin-type connector is connected to the negative DC potential terminal and the earth potential for connecting the negative DC potential terminal and the earth terminal to a second pin-type connector receiver.

13. Method of providing electrical energy to an industrial electric vehicle, the method comprising:
providing an industrial electric vehicle comprising the electrical traction system according to any one of the claims 1 to 10;
providing an electrical power supply system according to claim 12;
while the industrial electric vehicle is stationary:
- electrically connecting the electrical interface assembly with the stationary power supply module, and
- charging the electrical energy storage device of the industrial electric vehicle with an electric power received from the stationary power supply module by the electrical interface assembly.

14. The method according to claim 13, further including:
- operating the DC drivetrain bus at a drivetrain electric potential of more than 1500 volt;
- operating the electrical energy storage device at a storage electrical potential of less than 1500 volt; and
- operating the DC output at the drivetrain electrical potential of the DC drivetrain bus.
